# EUROPEAN PATENT APPLICATION

(11) **EP 4 636 053 A1**
(43) Date of publication of application: **22.10.2025**
(21) Application number: 25169779.3
(22) Date of filing: 10.04.2025
(51) Int. Cl.: C09K 5/06

(54) **PHASE CHANGE MATERIALS FOR COOLING OF AIR**

(30) Priority: 15.04.2024 IL 31217824
(71) Applicant: Itshak Barrabi Consulting Engineers Ltd., 4265139 Netanya (IL)
(72) Inventor: Zeygarnik, Andrey, 4331213 Ra anana (IL)
(74) Representative: Schulz Junghans Patentanwälte PartGmbB

(57) **Abstract**

Aspects of the invention relate to phase change materials which may be used for the cooling of air. In particular, the compositions are phase change materials comprising dimethyl sulfoxide, and a salt selected from the group consisting of: sodium nitrate, potassium nitrate, and lithium bromide. The phase change materials are designed for the efficient storage and release of thermal energy, by using them, heat and cold can be conserved during low-demand, night-time hours, taking advantage of lower energy rates. This stored energy is then released during peak demand times, reducing the strain on power grids and aligning with energy-saving strategies that capitalize on off-peak pricing.

## Description

### FIELD

Aspects of the invention relate to phase change materials which may be used for the cooling of air.

### BACKGROUND

Phase change material (PCM) is a material that absorbs and releases thermal energy by undergoing a phase change, for example, from solid to liquid and from liquid back to solid. Organic materials such as fatty acids or paraffin waxes, and inorganic materials such as salt hydrates have been used as PCM.

By melting and solidifying (for example, crystallization) of a PCM, it can store and release large amounts of energy per unity mass of PCM, to provide an effective means for cooling an environment.

Cooling, such as air conditioning of an environment, is a process which typically requires high input of energy at peak energy consumption hours. Standard air conditioning uses a liquid refrigerant inside an evaporator coil. The liquid refrigerant is compressed by a compressor and cooled, then warm air from inside the air-conditioned environment is passed over the evaporator coil containing cooled refrigerant, thereby cooling the air. The cool air is then passed into the air-conditioned environment, and the liquid refrigerant which has been heated by contact with warm air, evaporates inside the evaporator coil. The evaporated refrigerant then flows to a compressor, typically in contact with ambient, outdoor air, where it is compressed and cooled, to restart the cycle to cool warm air once again. During hot daytime hours in a given area, many users of an electric grid will operate their air conditioning, thereby creating large demands on power plants during peak demand hours. To accommodate this, power grids may implement variable electricity pricing plans for day and night to manage the load and maintain supply.

Since PCMs are designed for the efficient storage and release of thermal energy, by using them, heat and cold can be conserved during low-demand, night-time hours, taking advantage of lower energy rates. This stored energy is then released during peak demand times, reducing the strain on power grids and aligning with energy-saving strategies that capitalize on off-peak pricing.

### SUMMARY

Described herein are solutions of inorganic salts in dimethyl sulfoxide (DMSO) which are suitable for use as PCM, in particular in air conditioning applications. These solutions may be cooled at non-peak hours to crystallization temperature, and the solidified solutions may then be used to cool air during peak hours.

Particular inorganic salts suitable for mixtures and solutions of DMSO for PCM applications include lithium bromide, potassium nitrate, and sodium nitrate. Preferably, DMSO solutions for PCM may comprise between 2% and 14% (by weight) of these salts, preferably between 4% and 12% of these salts for cooling warm air. Further embodiments relate to methods for cooling warm-air environments comprising conveying air from warm environments, to the vicinity of the PCM, to cool the air, and subsequently conveying the cooled air to the warm-air environment.

### BRIEF DESCRIPTION OF THE FIGURES

Figure 1A and 1B show temperature graphs relating to pure DMSO;
Figure 2 shows a temperature graph relating to DMSO solution with 4% ZnCl₂ by weight;
Figure 3 shows a temperature graph relating to DMSO solution with 4% KCNS by weight;
Figs. 4A-4B show temperature graphs relating to DMSO (pure) and DMSO solution with 2% LiBr, 4%, 6% LiBr, and 8% LiBr by weight, through cooling (4A) and melting (4B);
Figs. 5A-5B show temperature graphs relating to DMSO (pure) and DMSO solution with KNO₃ with 2%, 4%, 6%, 6.6%, 8%, and 10% (5K and 5L) by weight, through cooling (5A) and melting (5B); and
Figs. 6A-6B show temperature graphs relating to DMSO (pure) and DMSO solution with NaNO₃ with 2%, 4%, 6%, 8%, 10%, 12%, and 14% by weight, through cooling (6A) and melting (6B).

### DETAILED DESCRIPTION

### Terms

**Dimethyl sulfoxide** (DMSO): A clear, colorless liquid at 20°C having the structure:

(CH₃)₂SO.

**Onset of Melting:** Nonideal mixtures and substances both melt (fuse) and crystallize (freeze) in the respective temperature ranges, each process having its onset and offset. The onset of melting refers to the temperature at which a solid mixture or a substance begins to transition to a liquid phase. It thus marks a temperature at which a PCM begins to absorb heat.

**Telkes Melting Point:** This is the temperature that was typically called simply a melting point by Maria Telkes in her pioneering studies of PCMs. This temperature can be measured by allowing the mixture to undergo slow melting under the action of the ambient environment, e.g., warm air, and observing a so-called plateau on the mixture's temperature curve versus time. When there is no phase transition, heating by an ambient environment leads the mixture's temperature to increase. When the mixture melts, it consumes the latent heat, which is also observed as the process of "release of coldness". The term "latent heat" as used herein is to be understood as "latent heat of melting" unless explicitly stated otherwise. Due to this process, the mixture's temperature stops increasing or increases more slowly. In some conditions of melting, when the temperature of the mixture stops increasing, a clear melting point is observed, which can be identified as the Telkes melting point, coinciding with the melting onset. In other mixtures, the mixture's temperature increases slowly. The Telkes melting point is calculated using two points: the point of onset of melting, when the slope of temperature increase drops, and the point when the slope of temperature increase rises again. The average of these two points is the Telkes melting point.

**Temperature of Crystallization:** In the context used herein, the crystallization temperature or the temperature of freezing refers to the specific temperature at which a substance transitions from a liquid phase to a solid crystalline phase during a cooling process. When one measures the curve of the mixture's temperature versus the time of cooling by a constant-temperature chilling agent, there is either a plateau or a local maximum. The local maximum is observed in the case of supercooling. In that case, the temperature of crystallization is taken as a temperature at the local maximum. If there is no supercooling and a plateau is observed, the temperature of crystallization is taken to be corresponding to the beginning of the plateau, also referred to as the onset of crystallization.

Unless otherwise explained, all technical and scientific terms used herein have the same meaning as commonly understood by one of ordinary skill in the art to which this disclosure belongs. The singular terms "a," "an," and "the" include plural referents unless context clearly indicates otherwise. Similarly, the word "or" is intended to include "and" unless the context clearly indicates otherwise. Although methods and materials similar or equivalent to those described herein can be used in the practice or testing of this disclosure, suitable methods and materials are described below. The term "comprises" means "includes." The abbreviation, "e.g." is derived from the Latin *exempli gratia,* and is used herein to indicate a non-limiting example. Thus, the abbreviation "e.g." is synonymous with the term "for example." The term, "consisting essentially of" limits the scope to the specified materials recited and those that do not materially affect the basic and novel characteristics of the claimed invention.

In case of conflict, the present specification, including explanations of terms, will control. In addition, all the materials, methods, and examples are illustrative and not intended to be limiting.

As described above, conventional air conditioning systems require large amounts of energy at peak hours to operate compressors to provide cooling of air in warm-air environments, for example, inside buildings or homes, to comfortable temperatures of about 20-25°C. One way to lower energy costs and lower energy demand for electric grids at peak hours is to use a PCM having a Telkes melting point of 7-12°C. Energy is expended to cool such a PCM to below freezing temperature at non-peak hours, for example nighttime, when ambient temperatures are low and demand for air conditioning is low. After freezing the PCM at low demand hours, the PCM is kept in a frozen state until times, when air conditioning is needed and there is high demand on electric grids.

A cooling system described herein preferably uses a PCM having a Telkes melting point of between 7-12°C, by allowing warm air to pass over the PCM, for example by using an air conduit equipped with a pump or a fan to transfer the warm air from the warm environment to the PCM storage area. The PCM melts, absorbing heat energy from the warm air, and cooling the air. The air can then be transported, for example, via an air conduit, into a warm environment to cool the warm environment to a comfortable temperature of 20-25°C.

Alternatively, systems described herein may use the aforementioned PCM, once cooled, to cool a coolant. The coolant may then be conveyed to an area in which it is contacted with warm air, thereby cooling the warm air in the warm environment. According to an embodiment, the coolant is water.

Use of such cooling systems is beneficial for the environment as it obviates the need to build new power plants to meet high demands at peak hours. Rather than using energy at peak hours, cooling systems described herein use energy at *non-peak* hours to freeze PCM, which is later used at peak hours to absorb heat by melting, thereby cooling air, in place of standard air conditioning systems. Such cooling systems may be adapted to transfer heat to and from existing air-conditioning systems, for example, using standard air-conditioning system components, such as compressors, condensers, heat pumps, storage tanks, and chillers, thereby obviating the need to replace entire air-conditioning systems.

In many electrical grids, electricity costs are lower at times of low demand. Systems described herein can be useful in that they provide energy-efficient and inexpensive air-conditioning in warm environments. Preferred embodiments of the invention can comprise DMSO in combination with one of lithium bromide, potassium nitrate, and sodium nitrate. When lithium bromide is used, a preferred weight percent in DMSO is 2-6%. When potassium nitrate is used, a preferred weight percent in DMSO is 2-6%. When sodium nitrate is used, a preferred weight percent in DMSO is 4-12%.

In addition to inorganic salt, other additives may be added to DMSO, for example, additives which absorb water molecules and do not absorb salts and DMSO to maintain low water content, thereby maintaining homogenous melting. Optionally, these additives are selected from the group consisting of molecular sieves and silica gel.

Described herein, according to an embodiment, is a composition for use in cooling air, comprising dimethyl sulfoxide, and a salt selected from the group consisting of: sodium nitrate, potassium nitrate, and lithium bromide. Optionally, the salt is sodium nitrate. Optionally, sodium nitrate is present in the composition in an amount of between 4-12% by weight. Optionally, sodium nitrate is present in the composition in an amount of between 10-12% by weight. Optionally, the salt is potassium nitrate. Optionally, potassium nitrate is present in the composition in an amount of between 2-6% by weight. Optionally, the salt is lithium bromide. Optionally, lithium bromide is present in the composition in an amount of between 2-6% by weight. Optionally, the composition is in solid form. Optionally, the composition consists essentially of dimethyl sulfoxide, and a salt selected from the group consisting of: sodium nitrate, potassium nitrate, and lithium bromide. Optionally, the composition consists of dimethyl sulfoxide, and a salt selected from the group consisting of: sodium nitrate, potassium nitrate, and lithium bromide. Optionally, upon freezing and melting of the composition, no sedimentation of the salt is evident. Optionally, the latent heat of the composition is not less than 10% less than the latent heat of pure dimethyl sulfoxide.

Further described herein are methods for cooling air in a warm-air environment comprising: freezing a composition comprising dimethyl sulfoxide, and a salt selected from the group consisting of: sodium nitrate, potassium nitrate, and lithium bromide; flowing warm air from a warm-air environment to the environment of the composition, thereby forming cool air; and flowing the cool air from the environment of the composition to the warm-air environment, thereby cooling air in the warm-air environment. Further described herein are methods for cooling air in a warm-air environment comprising: freezing a composition comprising dimethyl sulfoxide, and a salt selected from the group consisting of: sodium nitrate, potassium nitrate, and lithium bromide; contacting a coolant with the composition; flowing warm air from a warm-air environment to the environment of the coolant, thereby forming cool air; and flowing the cool air from the environment of the coolant to the warm-air environment, thereby cooling air in the warm-air environment. Optionally, freezing occurs by using an electric power drawn from an electric grid at non-peak electricity demand hours.

The invention further encompasses the following embodiments:
1. Composition for use in cooling air, the composition comprising dimethyl sulfoxide, and a salt selected from the group consisting of: sodium nitrate, potassium nitrate, and lithium bromide.
2. The composition according to embodiment 1, wherein the salt is sodium nitrate.
3. The composition according to embodiment 2, wherein the sodium nitrate is present in the composition in an amount of between 4-12% by weight.
4. The composition according to embodiment 3, wherein the sodium nitrate is present in the composition in an amount of between 10-12% by weight.
5. The composition according to embodiment 1, wherein the salt is potassium nitrate.
6. The composition according to embodiment 5, wherein the potassium nitrate is present in the composition in an amount of between 2-6% by weight.
7. The composition according to embodiment 1, wherein the salt is lithium bromide.
8. The composition according to embodiment 7, wherein the lithium bromide is present in the composition in an amount of between 2-6% by weight.
9. The composition according to any one of the previous embodiments, in solid form.
10. The composition according to any one of the previous embodiments, consisting essentially of dimethyl sulfoxide, and a salt selected from the group consisting of: sodium nitrate, potassium nitrate, and lithium bromide.
11. The composition according to any one of the previous embodiments, consisting of dimethyl sulfoxide, and a salt selected from the group consisting of: sodium nitrate, potassium nitrate, and lithium bromide.
12. The composition according to any one of the previous embodiments, wherein the upon freezing and melting of the composition, no sedimentation of the salt is evident.
13. The composition according to any one of the previous embodiments having a latent heat greater than a value that is 10% less than the latent heat of pure dimethyl sulfoxide.
14. A method for cooling air in a warm-air environment comprising:
   a. freezing a composition according to any one of the previous embodiments;
   b. flowing warm air from a warm-air environment to the environment of the composition, thereby forming cool air; and
   c. flowing the cool air from the environment of the composition to the warm-air environment, thereby cooling air in the warm-air environment.
15. A method for cooling air in a warm-air environment comprising:
   a. freezing a composition according to any one of embodiments 1-13;
   b. contacting a coolant with the composition of step a;
   c. flowing warm air from a warm-air environment to the environment of the coolant, thereby forming cool air; and
   d. flowing the cool air from the environment of the coolant to the warm-air environment, thereby cooling air in the warm-air environment.
16. The method according to embodiment 14 or 15, wherein freezing occurs by using an electric power drawn from an electric grid at non-peak electricity demand hours.

### EXAMPLES

The following examples are provided to illustrate certain particular features and/or embodiments. These examples should not be construed to limit the disclosure to the particular features or embodiments described.

### Example 1: Freezing and melting of DMSO

An apparatus comprising a jacketed reactor having an internal volume of about 300 milliliters (ml), equipped with a jacket in which coolant could be introduced, and a temperature sensor in the internal volume. The temperature in the jacket is set and measured by a dynamic temperature control system / circulation thermostat. The coolant used for cooling the reactor was ethylene glycol or polyethylene glycol. The coolant also could be used as a heating medium when analyzing melting of the contents of the internal volume. To avoid heat loss the reactor jacket was also protected by yet another jacket with a vacuum.

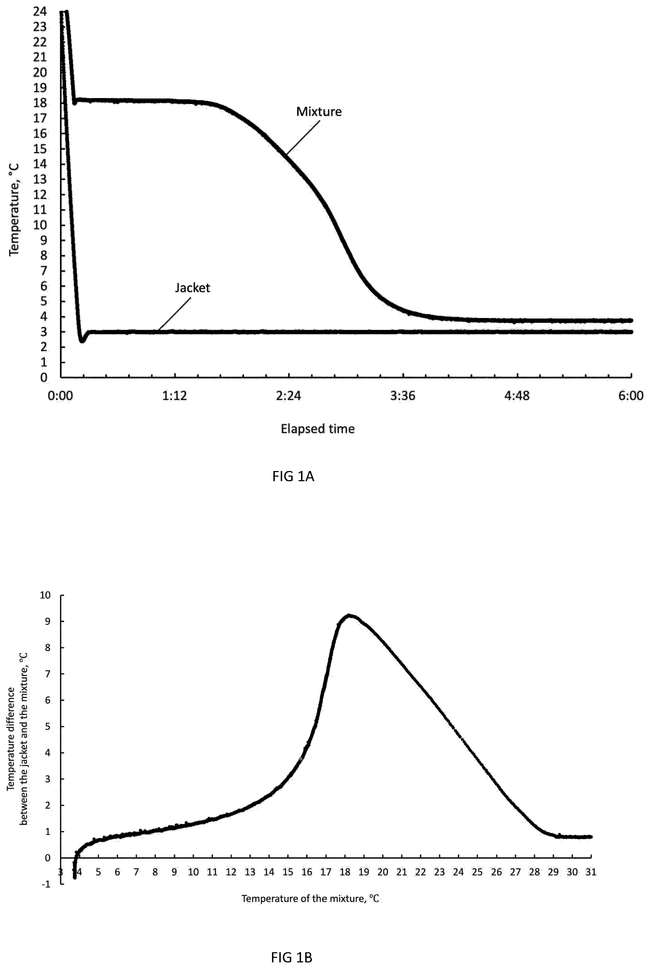

Approximately 300 ml of the internal volume of the reactor was filled with DMSO. DMSO at a temperature of about 30°C was cooled by introducing coolant, kept at 3°C, circulating through the jacket. The temperature of the internal volume, indicated by the upper line, and the temperature of the coolant in the external jacket, indicated by the lower, solid line, in Fig. 1A were tracked over time from starting the experiment (x-axis). In the experiments as described in the figures, the internal volume is designated as "mixture" even in those instances when DMSO alone is used. As shown in the figure, a crystallization of 18.3°C was determined by a plateau of temperature for an extended period of time at this temperature, indicating that coolant was withdrawing thermal energy from the DMSO in the reactor, while the DMSO was remaining at the same (crystallization) temperature.

Crystallized DMSO at about 4°C was then heated by circulating heated medium, whose temperature was increased in a temperature-programmed mode at a rate of 3. 5°C/hour from 3°C until the entire content of the reactor melted completely. As the temperature in the jacket and that of the content of the reactor within the internal volume increased, the difference between them was measured. Figure 1B depicts this difference versus the temperature of the internal volume, labeled in Figure 1B as "mixture". As the solid DMSO is heated, the temperature gradually increases with the application of heat and the above-mentioned temperature difference increases as well. At about 15.5°C, the difference in temperature between jacket and internal volume of the reactor increases, indicating initiation of melting, which absorbs heat from the environment. At about 18.5°C, the difference in temperature between jacket and internal volume of the reactor begins to decrease, represented by a peak on the curve in the figure. At about 28.5°C melting completes as is seen on the curve by reaching a constant temperature difference between jacket and internal volume.

For the avoidance of doubt, the entirety of the process is depicted in Figure 1B not in terms of temporal progression but rather in relation to the temperature of the internal volume during temperature-programmed heating. The temporal evolution of melting follows a usual trajectory: the temperature of the jacket that heats the internal volume consistently surpasses that of the internal volume itself. Prior to the onset of melting, the internal volume's temperature increases more slowly compared to the temperature-programmed heating of the jacket. Following the onset of melting, the internal volume begins to absorb heat and undergoes heating at a diminished rate, thereby amplifying the temperature difference between the jacket and the internal volume. Upon reaching a certain point in time, corresponding to the peak in Figure 1B, the heating of the internal volume accelerates again, indicating that the intensity of melting has begun to decrease. In the concluding phase of the process, subsequent to the offset of melting, the rate of heating the internal volume approximates that of temperature-programmed heating, while the temperature difference remains.

For DMSO, the following physical parameters were found when the experiment was performed, as tabulated in Table 1:

**Table 1:**

| | |
|---|---|
| Test Item | DMSO |
| Weight | 300.27 |
| Temperature of crystallization (°C) | 18.2 |
| Onset of fusion/ melting (°C) | 15.4 |
| Offset of fusion/ melting (°C) | 28.2 |
| Maximum on the melting profile (°C) | 18.17 |
| Telkes melting point (°C) | 16.75 |
| Latent heat (kJ/kg) | 197 |

The latent heat of pure DMSO is derived from literature sources (Gaylord Chemical) and was used to estimate the latent heat of the mixtures with salts. The estimation of the latent heat is based on the assumption that the latent heat of the mixture is proportional to the area under the curve of the temperature difference between the jacket and the mixture versus time, given that the weight and the volume of the mixture are approximately the same in all experiments, and other conditions are the same as well. Pure DMSO and the reference value of the latent heat for pure DMSO were used for calibration, and the curves were numerically integrated to get the area under the melting curve of the temperature difference between the jacket and the mixture versus time.

As can be seen in Table 1, the Telkes melting point was 16.75°C, which was above the desired range for efficient PCM.

Example 2A: Freezing and Melting of DMSO + Zinc Chloride Salt Solutions.

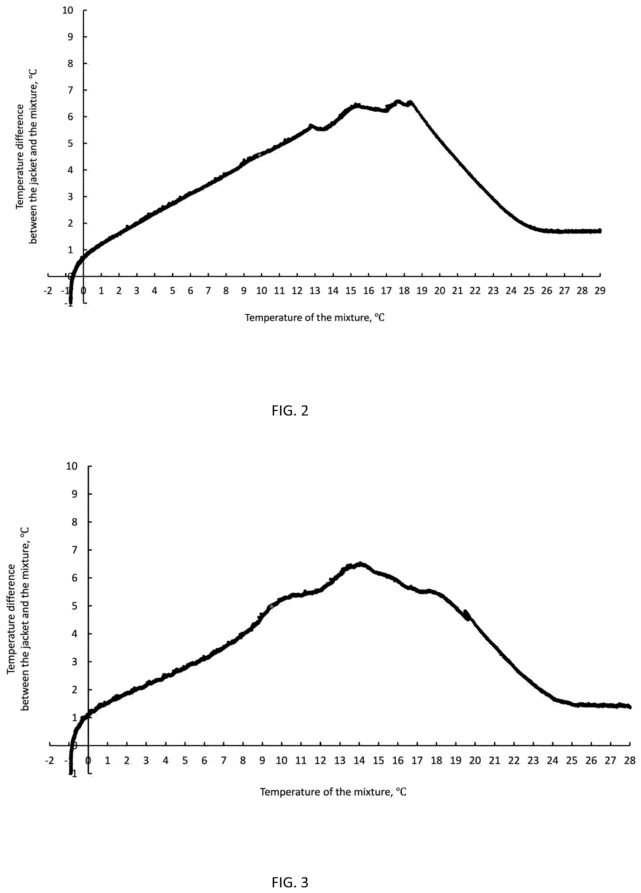

An attempt was made to prepare solutions of ZnCl₂ in order to reduce the melting point of DMSO. Initially, a solution of 2% ZnCl₂ by weight was prepared at room temperature, and subjected to a cooling and heating cycle as described in Example 1. The melting curve indicated a non-homogenous melting so that it was difficult to determine the onset of melting and other characteristic temperatures, but it was clear that melting occurred at temperatures above the desired range. The term "non-homogeneous melting" is used herein to refer to the process where a solid transitions to a liquid phase in a non-uniform manner across its volume and/or via intermediate phases and/or when a solid consists of several phases. This phenomenon often is present when there is a range of melting points. Unlike homogeneous melting, where the entire material melts uniformly at a specific temperature, non-homogeneous melting occurs at different temperatures in different parts of the material. When melting occurs without any phase transformations other than a single transition from a solid to a liquid, it is referred to as "homogeneous melting" or "simple melting." The latter type of melting is often described as ideal and theoretical. The non-homogeneity of melting does not constitute a problem unless it creates multiple melting points and leads to low latent heat. This was the case of ZnCl₂ in DMSO. In general, non-homogeneous melting will occur in mixtures less suitable for use as PCM. Heating of DMSO with 4% ZnCl₂ by weight is shown in Figure 2. At higher concentrations, non-homogenous melting was more evident.

Example 2B: Freezing and Melting of DMSO + Iodide Salt Solutions.

Solutions of Potassium Iodide (KI) were prepared at various concentrations, indicated in terms of percent KI by weight. The solutions were subjected to cooling and heating cycles as described in Example 1. The resulting data from these cycles is tabulated in Table 2:

**Table 2:**

| Test item | 2% KI | 4% KI | 6% KI | 8% KI |
|---|---|---|---|---|
| Temperature of crystallization (°C) | 17.47 | 16.28 | 15.1 | 13.66 |
| Onset of fusion/ melting (°C) | 13.3 | 12.0 | 10.5 | - |
| Offset of fusion/ melting (°C) | 27.0 | 25.4 | 24.2 | 22.5 |
| Maximum on the melting profile (°C) | 17.6 | 17.18 | 17.72 | 15.93 |
| Telkes melting point (°C) | 15.5 | 14.8 | - | - |
| Latent heat (estimated, (kJ/kg)) | 196 | 168 | 170 | 154 |

As shown in the table, the melting point did not reach the target Telkes melting point of between 7 and 12°C, even though relatively large amounts of KI were added. A decrease in latent heat was observed to a level of approximately 80% less than that of pure DMSO, indicating that solutions of KI in DMSO are not ideal PCM as they store relatively low heat per unit mass.

Similarly, salts prepared with Sodium Iodide (NaI) were tested, but they were determined to not reach the target Telkes melting point of between 7 and 12°C, even though relatively large amounts of NaI up to 8% by weight were added. The lowest achievable Telkes melting point was 15.4°C. Similar to KI, at these concentrations, the addition of NaI lowered latent heat of DMSO, and melting of the mixture was not homogenous.

Example 2C: Freezing and Melting of DMSO + Potassium Thiocyanate Salt Solutions.

Solutions of Potassium Thiocyanate (KCNS) were prepared at various concentrations, indicated in terms of percent by weight. The solutions were subjected to cooling and heating cycles as described in Example 1. The resulting data from these cycles is tabulated in Table 3:

**Table 3:**

| Test item | 2% KCNS | 4% KCNS | 6% KCNS |
|---|---|---|---|
| Temperature of crystallization (°C) | 16.68 | 14.79 | 12.87 |
| Onset of fusion/ melting (°C) | 9.0 | 7.5 | 5.5 |
| Offset of fusion/ melting (°C) | 25.7 | 24.0 | 21.6 |
| Maximum on the melting profile (°C) | 17.6 | 14.04 | 12.98 |
| Telkes melting point (°C) | 13.35 | 11.0 | 9.25 |
| Latent heat (estimated, (kJ/kg)) | 196 | 179 | 148 |

Non-homogenous melting was observed at 4% KCNS. As shown in the table, at 4% KCNS, a decrease in latent heat was observed to a level significantly lower than that of pure DMSO, indicating that solutions of KCNS in DMSO are not ideal PCM as they store relatively low heat per unit mass. Heating of DMSO with 4% KCNS by weight is shown in Figure 3.

Example 3: Freezing and Melting of DMSO + Lithium Bromide (LiBr) Salt Solutions.

Solutions of Lithium Bromide (LiBr) were prepared at various concentrations, indicated in terms of percent by weight. The solutions were subjected to cooling and heating cycles as described in Example 1. The resulting data from these cycles is tabulated in Table 4:

**Table 4:**

| Test item | 2% LiBr | 4% LiBr | 6% LiBr | 8% LiBr |
|---|---|---|---|---|
| Temperature of supercooling (°C) | 15.61 | 13.76 | 7.04 | 4.96 |
| Temperature of crystallization (°C) | 16.59 | 14.61 | 11.14 | 9.77 |
| Onset of fusion/ melting (°C) | 9.7 | 9.2 | 7.9 | 6 |
| Offset of fusion/ melting (°C) | 26.0 | 23.9 | 21.4 | 19.9 |
| Maximum on the melting profile (°C) | 11.25 | 12.43 | 10.7 | 9.86 |
| Telkes melting point (°C) | 11.8 | 10.2 | 9.1 | 7.85 |
| Latent heat (estimated, (kJ/kg)) | 234 | 208 | 201 | 187 |

As shown in the table, the goal Telkes melting point was reached at all of the concentrations tested, between 2 and 8%. At 6%, a temperature of supercooling of 7°C was observed. Solutions having between 2% and 6% were beneficial in that they had a relatively high latent heat and did not exhibit extreme supercooling. In addition, precipitation of salt was evident at 8% LiBr.

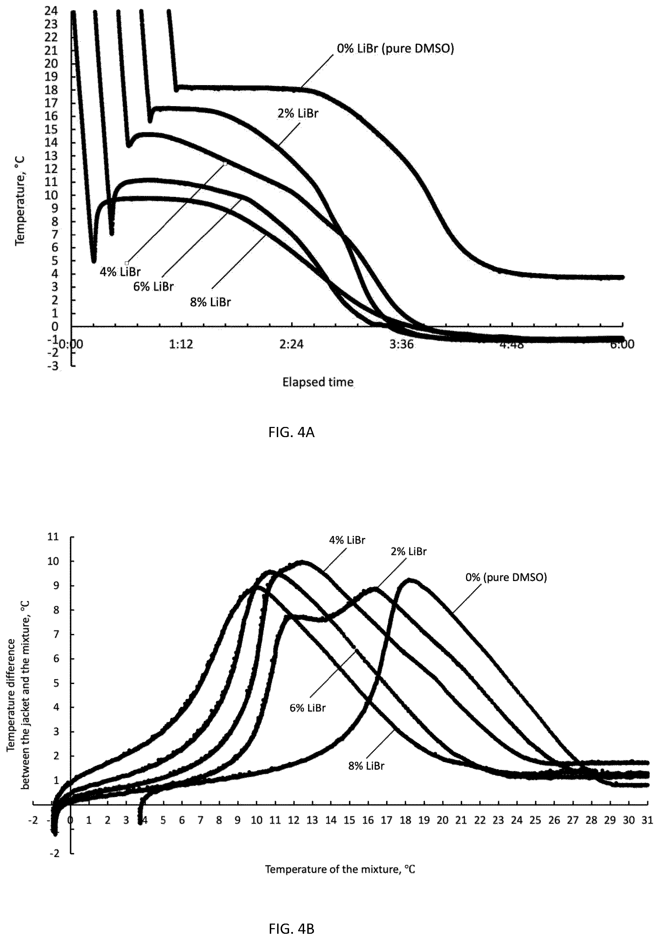

Figures 4A-4B show temperature graphs of various concentrations of DMSO/ LiBr solutions during cooling (4A) and melting (4B).

LiBr is hygroscopic and needs special conditions for its storage and handling.

### Example 4A: Freezing and Melting of DMSO + Potassium Nitrate (KNO₃) Salt Solutions

Solutions of KNO₃ were prepared at various concentrations, indicated in terms of percent by weight. The solutions were subjected to cooling and heating cycles as described in Example 1. The resulting data from these cycles is tabulated in Tables 5A and 5B:

**Table 5A:**

| Test item | 2% KNO₃ | 4% KNO₃ | 6% KNO₃ | 6.6% KNO₃ |
|---|---|---|---|---|
| Temperature of crystallization (°C) | 16.72/6.47 | 15.96/8-8.5 | 14.8/7.8 | 14.5/8.5-9.5 |
| Onset of fusion/ melting (°C) | ~8 | ~8 | ~8 | 8-9 |
| Offset of fusion/ melting (°C) | 26.5 | 26.0 | 25.4 | 24.9 |
| Maximum on the melting profile (°C) | 13.1/16.81-16.86 | 13.04-13.12 | 12.14 | 12.20 |
| Telkes melting point (°C) | 12.4 | 12.0 | 11.3 | 11.8 |
| Latent heat (estimated, (kJ/kg)) | 224 | 198 | 201 | 201 |

**Table 5B:**

| Test item | 8% KNO₃ | 10% KNO₃ |
|---|---|---|
| Temperature of crystallization (°C) | 13.48/8.2-9.3 | 12.54/9.5-10.9 |
| Onset of fusion/ melting (°C) | ~8 | ~8 |
| Offset of fusion/ melting (°C) | 23.4 | 23.6 |
| Maximum on the melting profile (°C) | 12.27-12.23 | 12.35-12.39 |
| Telkes melting point (°C) | 11.2 | 11.3 |
| Latent heat (estimated, (kJ/kg)) | 203 | 207 |

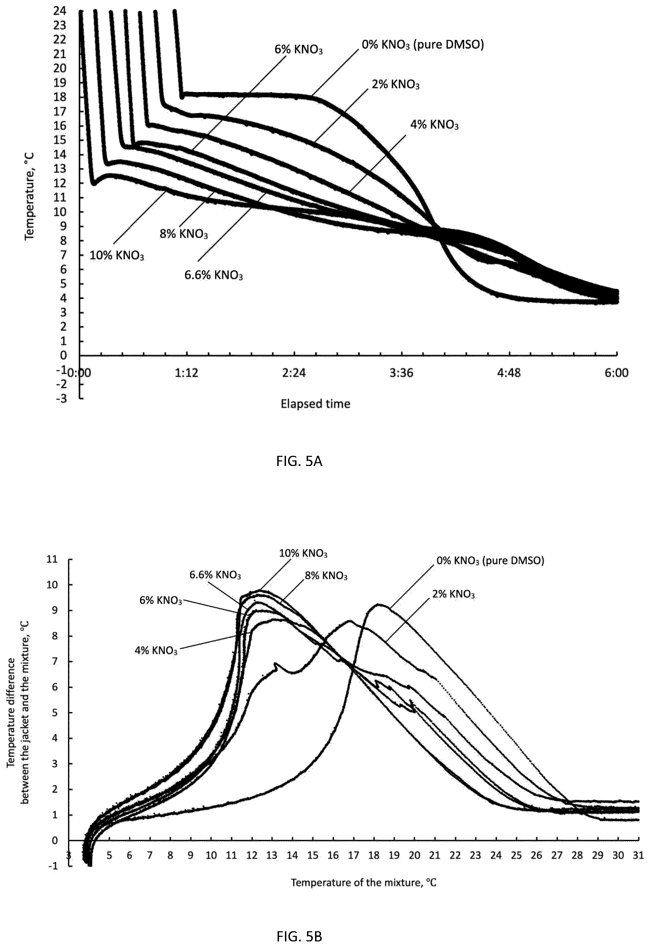

As shown in tables 5A and 5B, the goal Telkes melting point was reached at all of the concentrations tested, between 4 and 10%. In some of the temperature graphs shown below, two crystallization events are observed both in cooling and heating. This indicates the presence of two different melting phases. The latent heat of the compositions remained relatively high and close to that of DMSO. At salt levels of 6% and above, sedimentation of KNO₃ was observed. Overall, KNO₃ was an acceptable PCM, but up to levels of 6%. Figures 5A-5B show temperature graphs of various concentrations of DMSO/ KNO₃ solutions relative to pure DMSO, through cooling (5A) and melting (5B).

### Example 4B: Freezing and Melting of DMSO + Sodium Nitrate (NaNO₃) Salt Solutions

Solutions of NaNO₃ were prepared at various concentrations, indicated by percent by weight. The solutions were subjected to cooling and heating cycles as described in Example 1. The resulting data from these cycles is tabulated in Tables 6A and 6B:

**Table 6A:**

| Test item | 2% NaNO₃ | 4% NaNO₃ | 6% NaNO₃ | 8% NaNO₃ |
|---|---|---|---|---|
| Temperature of supercooling | -- | - | - | 11.35 |
| Temperature of crystallization (°C) | 17.0/5.8 | 15.65/6.3-6.8 | 14.4/6.2-7.2 | 12.7/7.0 |
| Onset of fusion/ melting (°C) | 7.3 | 8.2 | 8.8 | 8.5 |
| Offset of fusion/ melting (°C) | 26.5 | 24.5 | 23.6 | 23.6 |
| Maximum on the melting profile (°C) | 16.86-16.93 | 9.91/15.52 | 9.5 | 9.29-9.34 |
| Telkes melting point (°C) | 12.1 | 9.0 (first peak) | 8.8 | 8.5 |
| Latent heat (estimated, (kJ/kg)) | 217 | 205 | 202 | 200 |

**Table 6B:**

| Test item | 10% NaNO₃ | 12% NaNO₃ | 14% NaNO₃ |
|---|---|---|---|
| Temperature of supercooling | 10.07 | 7.45 | 5.0 |
| Temperature of crystallization (°C) | 11.06/6.9 | 9.15/6.5-7.0 | 7.2 |
| Onset of fusion/ melting (°C) | 7.0 | 6.1 | 5.9 |
| Offset of fusion/ melting (°C) | 20.0 | 18.4 | 18.6 |
| Maximum on the melting profile (°C) | 8.67 | 8.93 | 9.01 |
| Telkes melting point (°C) | 7.8 | 7.45 | 7.35 |
| Latent heat (estimated, (kJ/kg)) | 179 | 175 | 151 |

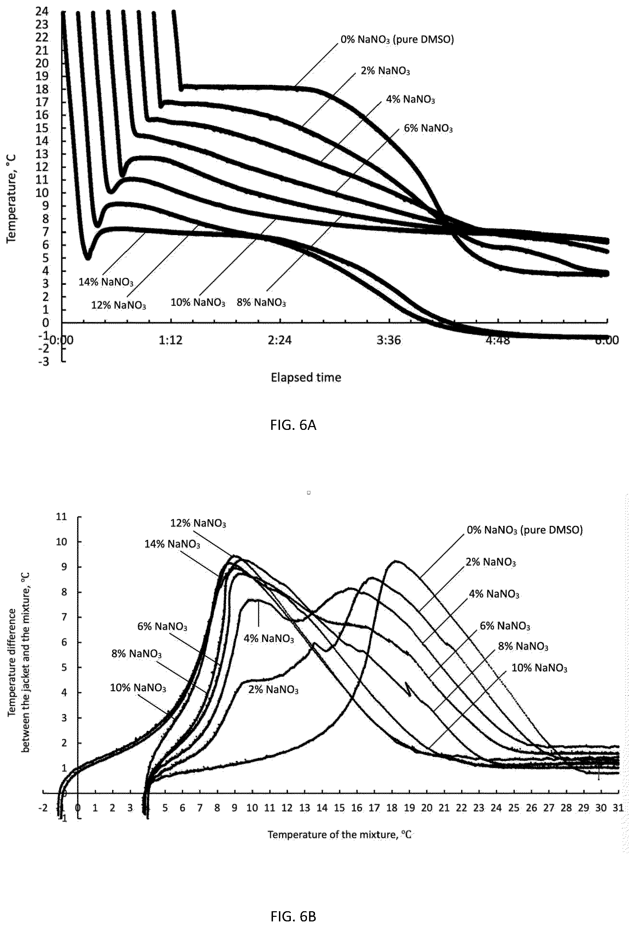

As shown in tables 6A and 6B, the goal Telkes melting point was reached at all of the concentrations tested, between 4 and 14%. Temperature graphs corresponding to this example are shown in Figures 6A-6B. In some of the temperature graphs shown below, two crystallization events are observed both in cooling and heating. The mixture has two freezing points. The higher of these decreases with an increase in the concentration of NaNO₃ from 18.6 to 9.15°C. The lowest freezing temperature is achieved when the concentration of NaNO₃ reaches 12%. Correspondingly, there are two melting points, meaning that there are two melting phases. At a NaNO₃ concentration of 8% and above, there is effectively only one melting phase. The lower of the two freezing temperatures is almost independent of the NaNO₃ concentration and remains 6.5-7°C. No salt precipitation was observed during cycling. The latent heat remains relatively high and is close to that of pure DMSO, even at high concentrations of about 12%. A higher concentration of the salt (14%) gives a single freezing point at 7.2°C, but the latent heat is relatively low: 77% of pure DMSO. Overall, this salt provides excellent performance as PCM, even better than KNO₃. A potential drawback of using high concentrations of NaNO₃ is that 10% NaNO₃ by weight and above in DMSO may be explosive.

In view of the many possible embodiments to which the principles of the disclosed invention may be applied, it should be recognized that the illustrated embodiments are only preferred examples of the invention and should not be taken as limiting the scope of the invention. Rather, the scope of the invention is defined by the following claims. We therefore claim as our invention all that comes within the scope and spirit of these claims.

## Claims

1. Use of a composition in cooling air, the composition comprising dimethyl sulfoxide, and a salt selected from the group consisting of: sodium nitrate, potassium nitrate, and lithium bromide.

2. Use of a composition according to claim 1, wherein the salt is sodium nitrate.

3. Use of a composition according to claim 2, wherein the sodium nitrate is present in the composition in an amount of between 4-12% by weight,
particularly wherein the sodium nitrate is present in the composition in an amount of between 10-12% by weight.

4. Use of a composition according to claim 1, wherein the salt is potassium nitrate.

5. Use of a composition according to claim 4, wherein the potassium nitrate is present in the composition in an amount of between 2-6% by weight.

6. Use of a composition according to claim 1, wherein the salt is lithium bromide.

7. Use of a composition according to claim 6, wherein the lithium bromide is present in the composition in an amount of between 2-6% by weight.

8. Use of a composition according to any one of the previous claims, wherein the composition is in solid form below 7°C, particularly below 10°C.

9. Use of a composition according to any one of the previous claims, wherein at least 98% (w/w), particularly at least 99% (w/w) of the composition consists of dimethyl sulfoxide, and a salt selected from the group consisting of: sodium nitrate, potassium nitrate, and lithium bromide.

10. Use of a composition according to any one of the previous claims, wherein the composition consists of dimethyl sulfoxide, and a salt selected from the group consisting of: sodium nitrate, potassium nitrate, and lithium bromide.

11. Use of a composition according to any one of the previous claims, wherein upon freezing and melting of the composition, no sedimentation of the salt is evident.

12. Use of a composition according to any one of the previous claims, wherein the composition has a latent heat of melting equal or greater than a value that is 90% of the latent heat of melting of pure dimethyl sulfoxide.

13. A method for cooling air in a warm-air environment comprising:
a. freezing a composition as specified in any one of the previous claims;
b. flowing warm air from a warm-air environment to the environment of the composition, thereby forming cool air; and
c. flowing the cool air from the environment of the composition to the warm-air environment, thereby cooling air in the warm-air environment.

14. A method for cooling air in a warm-air environment comprising:
a. freezing a composition as specified in any one of claims 1-12;
b. contacting a coolant with the composition of step a;
c. flowing warm air from a warm-air environment to the environment of the coolant, thereby forming cool air; and
d. flowing the cool air from the environment of the coolant to the warm-air environment, thereby cooling air in the warm-air environment.

15. The method according to claim 13 or 14, wherein freezing occurs by using an electric power drawn from an electric grid at non-peak electricity demand hours.
